# EUROPÄISCHE PATENTANMELDUNG

(11) **EP 2 946 827 A1**
(43) Veröffentlichungstag der Anmeldung: **25.11.2015**
(21) Anmeldenummer: 15167053.6
(22) Anmeldetag: 11.05.2015
(51) Int. Cl.: B01D 53/04, B01J 20/28

(54) **VERWENDUNG EINES WABENFÖRMIGEN FILTERELEMENTS ZUR ADSORPTION VON KOHLENWASSERSTOFFEN**

(30) Priorität: 19.05.2014 DE 102014007215
(71) Anmelder: Carl Freudenberg KG, 69469 Weinheim (DE)
(72) Erfinder: Felber, Uwe, 69518 Abtsteinach (DE); Stößer, Thomas, 68519 Viernheim (DE); Stahl, Ulrich, 69514 Laudenbach (DE); Wolff, Thomas, Dr., 95213 Münchberg (DE)

(57) **Zusammenfassung**

Eine Verwendung eines Filterelements (1), umfassend einen Körper (2) der Material (3) aufweist, welches zur Adsorption von Gasen und Dämpfen geeignet ist, wobei der Körper (2) als Wabenkörper ausgebildet ist, ist im Hinblick auf die Aufgabe, einen weitgehend abgeschlossenen Raum problemlos mit gefilterter Zuluft zu versorgen, wobei die Zuluft von Schadstoffen nahezu vollständig befreit ist, die in Aerosolen, Gasen, Flüssigkeitströpfchen oder festen Partikeln vorliegen, und wobei ein konstruktiv einfach aufgebautes Filterelement verwendet wird, dadurch gekennzeichnet, dass das Filterelement (1) verwendet wird, um einen zumindest teilweise abgeschlossenen Raum mit gefilterter Zuluft zu versorgen, wobei die Zuluft von Schadstoffen befreit ist, die in Aerosolen, Gasen, Flüssigkeitströpfchen oder festen Partikeln vorliegen.

## Beschreibung

### Technisches Gebiet

Die Erfindung betrifft eine Verwendung eines Filterelements nach dem Oberbegriff des Patentanspruchs 1.

### Stand der Technik

Aus der WO 2010/049 052 A1 ist ein Filterelement bekannt, welches als sogenannter Kombifilter ausgestaltet ist. Ein solches Filterelement filtert Partikel und adsorbiert Gase. Filterelemente dieser Art können verwendet werden, um Fahrgasträume von schädlichen Stoffen weitgehend frei zu halten.

Kabinen von Fahrzeugen müssen von gesundheitsschädlichen Stoffen, insbesondere von Gasen und Dämpfen, in hohem Maße zuverlässig freigehalten werden.

Vor diesem Hintergrund wird in der DE 10 2013 011 457 A1 vorgeschlagen, Aktivkohle in schütt- oder rieselfähiger Form zu verwenden. Es wird insbesondere vorgeschlagen, Aktivkohle in Form von Granulaten zu verwenden.

Die Verwendung von Aktivkohle in dieser Form ist bereits durch die bereits erwähnten Kombifilter bekannt geworden, welche zusätzlich eine Faltenstruktur zeigen.

Überdies lehrt die DE 10 2013 011 457 A1, Aktivkohle in Schäumen mittels Klebstoffen einzubetten. Hierbei ist nachteilig, dass Aktivkohlefläche durch den Klebstoff gehindert wird, als Adsorptionsfläche zu dienen. Es wird auch gelehrt, Schüttungen aus Aktivkohle zu verwenden.

Vor diesem Hintergrund ist aus der DE 101 04 882 B4 bereits ein Aktivkohleformkörper bekannt, welcher eine Wabenstruktur aufweist. Der Aktivkohleformkörper ist durch Extrusion einer Mischung aus Aktivkohle und weiterer Stoffe gefertigt und dient zur Verwendung als Adsorptionsfilter.

Ein Aktivkohleformkörper, der ein karbonisiertes Harz aufweist, ist aus der DE 102 13 016 B4 bekannt.

Ein weiteres Filterelement, welches einen Aktivkohleformkörper mit einer Wabenstruktur aufweist, ist aus der DE 101 50 062 B4 bekannt.

Die DE 10 2004 063 434 B4 offenbart einen weiteren Aktivkohleformkörper mit Kanälen.

Aus der DE 10 2005 032 345 B4 ist ein Formkörper mit einer anorganischen Stützstruktur bekannt, bei welchem Adsorptionsmittel in die Stützstruktur eingebettet sind.

Die DE 10 2004 039 343 B4 zeigt einen weiteren Aktivkohleformkörper mit hohem Adsorptionsvermögen.

### Darstellung der Erfindung

Der Erfindung liegt die Aufgabe zu Grunde, einen weitgehend abgeschlossenen Raum problemlos mit gefilterter Zuluft zu versorgen, wobei die Zuluft von Schadstoffen nahezu vollständig befreit ist, die in Aerosolen, Gasen, Flüssigkeitströpfchen oder festen Partikeln vorliegen, und wobei ein konstruktiv einfach aufgebautes Filterelement verwendet wird.

Erfindungsgemäß wird die voranstehende Aufgabe mit den Merkmalen des Patentanspruchs 1 gelöst.

Erfindungsgemäß ist erkannt worden, dass ein Wabenkörper ermöglicht, ein Filterelement sehr kompakt zu bauen. Weiter ist erkannt worden, dass ein Wabenkörper einen geringen Druckverlust zwischen Anströmseite und Abströmseite des Filterelements bewirkt und daher wenig apparative Probleme verursacht. Überraschend ist erkannt worden, dass üblicherweise eingesetzte Filterelemente mit Aktivkohle-Pellets oder Aktivkohle-Granulaten einen relativ hohen Druckverlust verglichen mit einem Wabenkörper zeigen.

Weiter überraschend zeigt ein Wabenkörper eine gute Adsorptionsleistung, obwohl er offene Kanäle aufweist und die eigentliche Adsorption nur aufgrund von Kontakt des zu filternden Mediums mit den Wänden der Kanäle in Strömungsrichtung erfolgt.

Überraschend zeigt ein Wabenkörper mit 62 Kanälen pro Quadratzentimeter eine schlechte Adsorptionsdynamik im Vergleich zu einem Wabenkörper mit 93 Kanälen pro Quadratzentimeter. Der Wabenkörper mit 62 Kanälen pro Quadratzentimeter zeigt zwar eine hohe adsorbierte Masse und damit eine hohe Gesamtadsorptionsleistung, aber eine schlechte Adsorptionsdynamik.

Die Adsorptionsdynamik ist durch die Breite einer Massenübergangszone oder durch eine Steigung einer Durchbruchskurve bei einem Durchbruch von 50% charakterisiert. Der Wabenkörper mit 62 Kanälen pro Quadratzentimeter zeigt eine schon früher wachsende Steigung und bricht früher durch. Der Wabenkörper mit 93 Kanälen pro Quadratzentimeter zeigt zwar eine geringere Gesamtadsorptionsleistung, aber eine bessere Adsorptionsdynamik, denn er bricht erst später durch, dafür aber steiler und schneller. Unter einem Durchbruch wird das Durchbrechen von Schadstoffen auf die Abströmseite verstanden. Ein Durchbruch von 50% bedeutet, dass 50% des anströmenden Schadstoffes auf die Abströmseite durchbricht.

Durch die erfindungsgemäße Verwendung wird abströmseitig des Filterelements eine Prüfgas-Konzentration unter 10 µg/g nach der Zyklohexan-Methode entsprechend EN 12941: 1998 bei einer Prüfdauer von 70 min gemessen nach EN 15695-2: 2011 erreicht.

Insoweit ist es möglich, einen weitgehend abgeschlossenen Raum problemlos mit gefilterter Zuluft zu versorgen, wobei die Zuluft von Schadstoffen nahezu vollständig befreit ist, die in Aerosolen, Gasen, Flüssigkeitströpfchen oder festen Partikeln vorliegen, und wobei ein konstruktiv einfach aufgebautes Filterelement verwendet wird.

Folglich ist die eingangs genannte Aufgabe gelöst.

Der Wabenkörper könnte eine sehr gute Adsorptionsdynamik aufweisen. So wird abströmseitig des Filterelements eine Prüfgas-Konzentration unter 10 µg/g nach der Zyklohexan-Methode entsprechend EN 12941: 1998 bei einer Prüfdauer von 70 min gemessen nach EN 15695-2: 2009 erreicht.

Der Wabenkörper könnte aus Aktivkohle gefertigt sein oder Aktivkohle aufweisen. Aktivkohle kann in Form einer Paste oder als Teil einer Paste leicht zu einem Wabenkörper extrudiert werden.

Der Anteil an Aktivkohle am Wabenkörper könnte zwischen 50 und 80 Gewichtsprozent betragen. Hierdurch weist der Wabenkörper eine ausreichende Menge an Aktivkohle auf und ist dennoch mechanisch stabil.

Im Wabenkörper könnten Kanäle ausgebildet sein und/ oder der Wabenkörper könnte von Kanälen durchgriffen sein, welche vollständig offen sind. Durch die Kanäle kann zu filternde Luft hindurchströmen, ohne dass zwischen Anströmseite und Abströmseite ein wesentlicher Druckverlust auftritt.

Die Wandstärke der Kanalwände könnte zwischen 200 Mikrometer und 400 Mikrometer betragen. Hierdurch wird ein Wabenkörper mit einer sehr großen Anzahl an Kanälen geschaffen.

Vor diesem Hintergrund könnte die Anzahl der Kanäle im Wabenkörper zwischen 40 und 100 Kanälen pro Quadratzentimeter betragen. Diese Kanaldichte hat sich als besonders vorteilhaft erwiesen, um einen geringen Druckverlust bei hoher Adsorptionsdynamik sicher zu stellen.

Der Wabenkörper könnte 93 Kanäle pro Quadratzentimeter aufweisen, eine Wandstärke von 285 µm zeigen und einen Anteil an Aktivkohle von 65 Gewichtsprozent aufweisen. Es ist konkret erkannt worden, dass ein Wabenkörper mit 93 Kanälen pro Quadratzentimeter und 240 µm Wandstärke nicht die gewünschten Ergebnisse liefert. Bei einer Wandstärke von 285 µm bzw. noch dickeren Wändstärken wird die Haltezeit bis zu einem Durchbruch von 10 ppm geschafft. Es ist erkannt worden, dass eine geeignete Kombination aus Kanaldichte, Wandstärke und Anteil an Aktivkohle gegeben sein muss, um die gewünschten Ergebnisse zu erreichen.

Ein Wabenkörper mit 62 Kanälen pro Quadratzentimeter und 65% Anteil an Aktivkohle hat nicht die gewünschten Ergebnisse geliefert. Ein Wabenkörper mit 93 Kanälen pro Quadratzentimeter mit gleichem Anteil an Aktivkohle und niedrigerer Wandstärke ebenso wenig. Ein Wabenkörper mit 93 Kanälen pro Quadratzentimeter mit 65 Gewichtsprozent Anteil an Aktivkohle und 285 µm Wandstärke führt zu den erforderlichen Ergebnissen.

Ein Filterelement, welches aus einem zuvor genannten optimierten Wabenkörper hergestellt ist, zeigt bei einer Anströmgeschwindigkeit von 0,2 m/s einen Druckverlust von weniger als 50 Pascal.

Ein Filterelement mit gleichen Außenmaßen und vergleichbarer Adsorptionsleistung, welches mit Aktivkohle in anderer Form hergestellt ist, z.B. als Granulat in Faltenform, Schüttung oder Schaum, zeigt bei einer Anströmgeschwindigkeit von 0,2 m/s einen Druckverlust von mehr als 100 Pascal.

Der Raum könnte sich in Anlagen der Chemie-, Öl- oder Gasindustrie befinden. In diesen Industriezweigen ist Personal häufig Dämpfen und Schadstoffen ausgesetzt und muss entsprechend geschützt werden.

Der Raum könnte als Kabine eines Fahrzeugs ausgestaltet sein. Kabinen von Fahrzeugen müssen von gesundheitsschädlichen Stoffen in sehr hohem Maße zuverlässig freigehalten werden. Diese Aufgabe kann ein Filterelement der hier beschriebenen Art sehr gut lösen.

Ein Innenraumluftfiltersystem für die Fahrerkabine von Land- und Arbeitsmaschinen, insbesondere mit Spritz- oder Sprühvorrichtungen für Pflanzenschutz- oder Düngemittel, könnte ein Filterelement der hier beschriebenen Art umfassen und ein Gehäuse mit einem Lufteinlass und einem Luftauslass, in welchem das Filterelement dichtend die Einlassseite von der Auslassseite trennt.

Eine Fahrerkabine eines Fahrzeugs oder einer Arbeitsmaschine könnte ein Innenraumluftfiltersystem umfassen. Denkbar ist auch die Verwendung eines Filterelements der hier beschriebenen Art oder eines Innenraumluftfiltersystems in einer Fahrerkabine eines Fahrzeugs oder einer Arbeitsmaschine.

Das Fahrzeug könnte als land- oder forstwirtschaftliches Fahrzeug ausgestaltet sein. Ein Filterelement der hier beschriebenen Art könnte in einem Fahrzeug, welches in der Land- oder Forstwirtschaft verwendet wird, eingesetzt werden. Kabinen land- oder forstwirtschaftlicher Fahrzeuge müssen von gesundheitsschädlichen Stoffen, insbesondere von Pestiziden, in sehr hohem Maße zuverlässig freigehalten werden. Diese Aufgabe kann ein Filterelement der hier beschriebenen Art sehr gut lösen.

Das Fahrzeug könnte auf dem Bau verwendet werden. Baumaschinen und die diese betreibenden Personen sind sehr hoher Staubbelastung ausgesetzt und können durch das hier beschriebene Filterelement geschützt werden.

Das Fahrzeug könnte als PKW, insbesondere als Taxi, oder als NKW, insbesondere als Lastkraftwagen, ausgestaltet sein. In beiden Fahrzeugtypen müssen der Fahrer und zu befördernde Personen vor Schadstoffen geschützt werden.

Das Filterelement könnte als Kombifilter ausgestaltet sein, welches eine Partikel filternde Filterstufe aufweist. So können auch kleine Partikel wie Blütenpollen gefiltert werden.

Das Filterelement könnte als Kombifilter ausgestaltet sein, welches eine Staub filternde Filterstufe und eine Aerosol filternde Filterstufe aufweist. So kann das Filterelement die sogenannte Kategorie 4 erfüllen und nach EN 15695 in der Landwirtschaft verwendet werden.

### Kurzbeschreibung der Zeichnung

In der Zeichnung zeigen
- Fig. 1: ein Filterelement, welches einen quaderförmigen Wabenkörper aus Aktivkohle aufweist, wobei die Waben im Wesentlichen rechteckige Öffnungen umfassen, die in Kanäle münden, welche den Wabenkörper durchlaufen,
- Fig. 2: ein Filterelement, welches einen zylinderförmigen Wabenkörper aus Aktivkohle aufweist, wobei die Waben im Wesentlichen rechteckige Öffnungen umfassen, die in Kanäle münden, welche den Wabenkörper durchlaufen, und
- Fig. 3: ein Diagramm, welches eine Durchbruchskurve für Zyklohexan für einen Wabenkörper mit 93 Kanälen pro Quadratzentimeter mit 65% Aktivkohleanteil und 285 µm Wandstärke im Vergleich zu einer Durchbruchskurve für einen Wabenkörper mit 62 Kanälen pro Quadratzentimeter zeigt.

### Ausführung der Erfindung

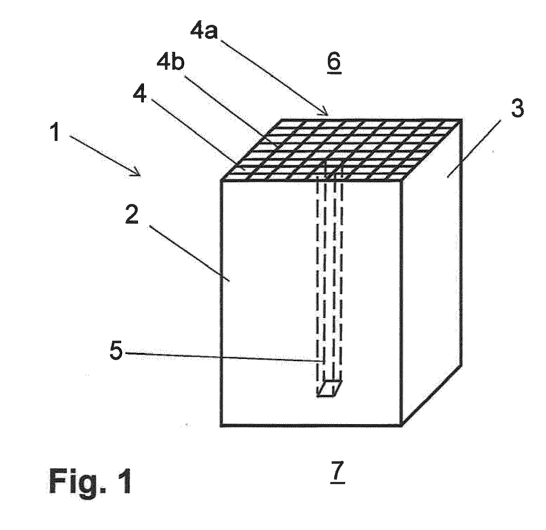

Fig. 1 zeigt ein Filterelement 1, umfassend einen quaderförmigen Körper 2 der Material 3 aufweist, welches zur Adsorption von Gasen und Dämpfen geeignet ist. Der Körper 2 ist als Wabenkörper ausgebildet. Die Waben 4 umfassen rechteckige Öffnungen, die in Kanäle 5 münden, die den Körper 2 durchgreifen. Andere Geometrien sind denkbar. Die Waben 4 sind auf einer Querschnittsfläche 4a angeordnet.

Luft kann durch die Kanäle 5 von einer Anströmseite 6 zu einer Abströmseite 7 strömen, wobei Schadstoffe in der Luft vom Material 3 adsorbiert werden.

Der Wabenkörper weist 93 Kanäle 5 pro Quadratzentimeter Querschnittsfläche 4a auf. Er zeigt eine Wandstärke 4b von 285 µm. Er weist einen Anteil an Aktivkohle von 65 Gewichtsprozent auf.

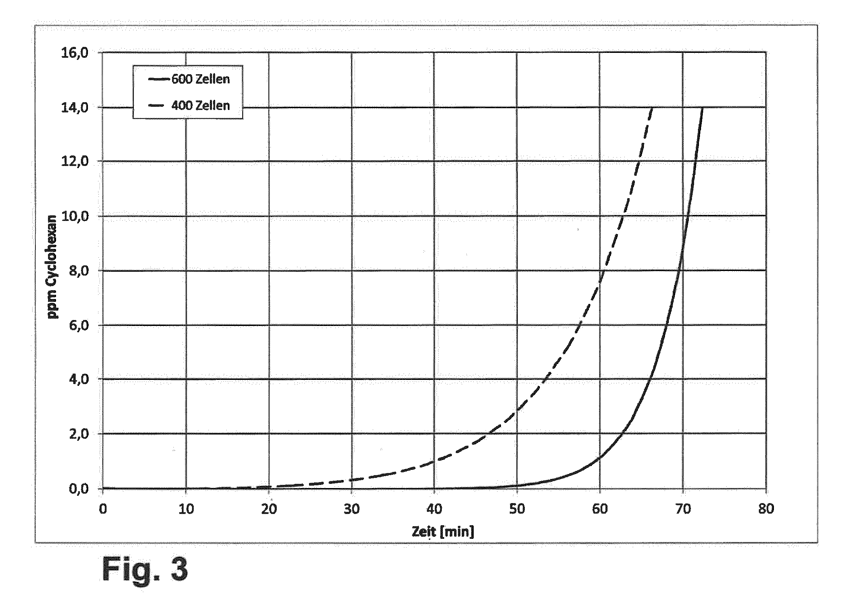

Der Wabenkörper weist eine Adsorptionsleistung auf, wie sie in Fig. 3 dargestellt ist. Der Wabenkörper zeigt eine derartige Adsorptionsdynamik, dass abströmseitig des Filterelements eine Prüfgas-Konzentration unter 10 µg/g nach der Zyklohexan-Methode entsprechend EN 12941: 1998 bei einer Prüfdauer von 70 min gemessen nach EN 15695-2: 2009 erreicht wird.

Der Wabenkörper weist Aktivkohle auf. Der Anteil an Aktivkohle am Wabenkörper beträgt zwischen 50 und 80 Gewichtsprozent. Insoweit ist das Material 3, welches zur Adsorption von Gasen und Dämpfen geeignet ist, als Aktivkohle ausgestaltet.

Im Wabenkörper sind Kanäle 5 ausgebildet und der Wabenkörper ist von Kanälen 5 durchgriffen, welche vollständig offen sind. Die Wandstärke der Kanalwände beträgt zwischen 200 Mikrometer und 400 Mikrometer. Die Anzahl der Kanäle 5 im Wabenkörper beträgt zwischen 40 und 100 Kanälen pro Quadratzentimeter.

Durch geeignete Wahl der Kanaldichte, des Anteils an Aktivkohle und der sich ergebenden offenen Querschnittsfläche, welche durch die Wandstärke definiert wird, lässt sich das Optimum für die Adsorptionsdynamik bei gleichzeitig nicht zu hohem Gegendruck erreichen.

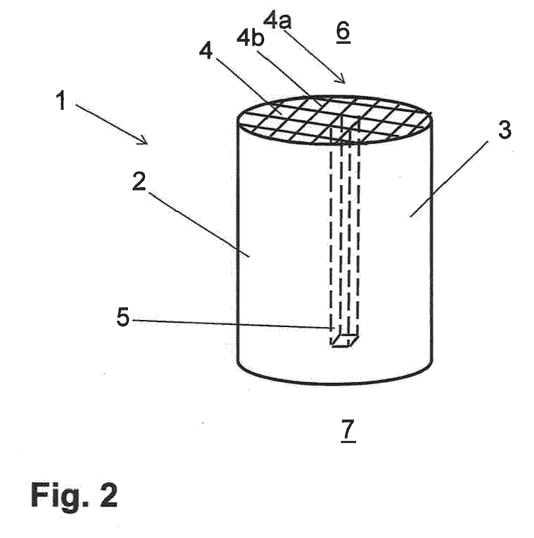

Fig. 2 zeigt ein Filterelement 1, umfassend einen zylinderförmigen Körper 2 der Material 3 aufweist, welches zur Adsorption von Gasen und Dämpfen geeignet ist. Der Körper 2 ist als Wabenkörper ausgebildet. Die Waben 4 umfassen rechteckige Öffnungen, die in Kanäle 5 münden, die den Körper 2 durchgreifen. Andere Geometrien sind denkbar.

Luft kann durch die Kanäle 5 von einer Anströmseite 6 zu einer Abströmseite 7 strömen, wobei Schadstoffe in der Luft vom Material 3 adsorbiert werden.

Der Wabenkörper kann eine Adsorptionsleistung gemäß Fig. 3 aufweisen. Der Wabenkörper zeigt dann eine derartige Adsorptionsdynamik, dass abströmseitig des Filterelements eine Prüfgas-Konzentration unter 10 µg/g nach der Zyklohexan-Methode entsprechend EN 12941: 1998 bei einer Prüfdauer von 70 min gemessen nach EN 15695-2: 2009 erreicht wird.

Der Wabenkörper weist Aktivkohle auf. Der Anteil an Aktivkohle am Wabenkörper beträgt zwischen 50 und 80 Gewichtsprozent. Insoweit ist das Material 3, welches zur Adsorption von Gasen und Dämpfen geeignet ist, als Aktivkohle ausgestaltet.

Im Wabenkörper sind Kanäle 5 ausgebildet und der Wabenkörper ist von Kanälen 5 durchgriffen, welche vollständig offen sind. Die Wandstärke 4b der Kanalwände beträgt zwischen 200 Mikrometer und 400 Mikrometer. Die Anzahl der Kanäle 5 im Wabenkörper beträgt zwischen 40 und 100 Kanäle pro Quadratzentimeter.

Fig. 3 zeigt ein Diagramm, welches eine Durchbruchskurve für Zyklohexan für einen Wabenkörper gemäß Fig. 1 mit 93 Kanälen 5 pro Quadratzentimeter mit 65 Gewichtsprozent Anteil an Aktivkohle und 285 µm Wandstärke (600 Zellen, durchgezogen) im Vergleich zu einer Durchbruchskurve für einen Wabenkörper mit 62 Kanälen 5 pro Quadratzentimeter (400 Zellen, gestrichtelt) zeigt.

Man erkennt deutlich, dass Schadstoffe, nämlich das Zyklohexan, bei dem Wabenkörper mit 62 Kanälen 5 nach kürzerer Zeit auf die Abströmseite durchbrechen als bei dem Wabenkörper mit 93 Kanälen 5 pro Quadratzentimter Anströmfläche bzw. Querschnittsfläche 4a.

## Patentansprüche

1. Verwendung eines Filterelements (1), umfassend einen Körper (2) der Material (3) aufweist, welches zur Adsorption von Gasen und Dämpfen geeignet ist, wobei der Körper (2) als Wabenkörper ausgebildet ist, **dadurch gekennzeichnet, dass** das Filterelement (1) verwendet wird, um einen zumindest teilweise abgeschlossenen Raum mit gefilterter Zuluft zu versorgen, wobei die Zuluft von Schadstoffen befreit ist, die in Aerosolen, Gasen, Flüssigkeitströpfchen oder festen Partikeln vorliegen.

2. Verwendung nach Anspruch 1, **dadurch gekennzeichnet, dass** der Wabenkörper eine derartige Adsorptionsdynamik zeigt, dass abströmseitig des Filterelements eine Prüfgas-Konzentration unter 10 µg/g nach der Zyklohexan-Methode entsprechend EN 12941: 1998 bei einer Prüfdauer von 70 min gemessen nach EN 15695-2: 2009 erreicht wird.

3. Verwendung nach Anspruch 1 oder 2, **dadurch gekennzeichnet, dass** der Wabenkörper aus Aktivkohle gefertigt ist oder Aktivkohle aufweist.

4. Verwendung nach Anspruch 3, **dadurch gekennzeichnet, dass** der Anteil an Aktivkohle am Wabenkörper zwischen 50 und 80 Gewichtsprozent beträgt.

5. Verwendung nach einem der Ansprüche 1 bis 4, **dadurch gekennzeichnet, dass** im Wabenkörper Kanäle (5) ausgebildet sind und/ oder dass der Wabenkörper von Kanälen (5) durchgriffen ist, welche vollständig offen sind.

6. Verwendung nach Anspruch 5, **dadurch gekennzeichnet, dass** die Wandstärke (4b) der Kanalwände zwischen 200 Mikrometer und 400 Mikrometer beträgt.

7. Verwendung nach Anspruch 5 oder 6, **dadurch gekennzeichnet, dass** die Anzahl der Kanäle (5) im Wabenkörper zwischen 40 und 100 Kanäle (5) pro Quadratzentimeter beträgt.

8. Verwendung nach einem der voranstehenden Ansprüche, **dadurch gekennzeichnet, dass** der Wabenkörper 93 Kanäle (5) pro Quadratzentimeter aufweist, eine Wandstärke (4b) von 285 µm zeigt und einen Anteil an Aktivkohle von 65 Gewichtsprozent aufweist.

9. Verwendung nach einem der voranstehenden Ansprüche, **dadurch gekennzeichnet, dass** sich der Raum in Anlagen der Chemie-, Öl- oder Gasindustrie befindet.

10. Verwendung nach einem der voranstehenden Ansprüche, **dadurch gekennzeichnet, dass** der Raum als Kabine eines Fahrzeugs ausgestaltet ist.

11. Verwendung nach Anspruch 10, **dadurch gekennzeichnet, dass** das Fahrzeug als land- oder forstwirtschaftliches Fahrzeug ausgestaltet ist.

12. Verwendung nach Anspruch 10, **dadurch gekennzeichnet, dass** das Fahrzeug auf dem Bau verwendet wird.

13. Verwendung nach Anspruch 10, **dadurch gekennzeichnet, dass** das Fahrzeug als PKW oder NKW ausgestaltet ist.

14. Verwendung nach einem der voranstehenden Ansprüche, **dadurch gekennzeichnet, dass** das Filterelement (1) als Kombifilter ausgestaltet ist, welches eine Partikel filternde Filterstufe aufweist.

15. Verwendung nach einem der voranstehenden Ansprüche, **dadurch gekennzeichnet, dass** das Filterelement (1) als Kombifilter ausgestaltet ist, welches eine Staub filternde Filterstufe und eine Aerosol filternde Filterstufe aufweist.
